# EUROPEAN PATENT APPLICATION

(11) **EP 3 527 615 A1**
(43) Date of publication of application: **21.08.2019**
(21) Application number: 18157271.0
(22) Date of filing: 16.02.2018
(51) Int. Cl.: C08K 3/30, C01G 9/08, C09C 1/04

(54) **THERMOCONDUCTIVE FILLER PARTICLES AND POLYMER COMPOSITIONS CONTAINING THEM**

(71) Applicant: Venator Germany GmbH, 47198 Duisburg (DE)
(72) Inventor: ROHE, Markus, 47445 Moers (DE); HOCKEN, Jörg, 40670 Meerbusch (DE); HARWARDT, Marc, 47839 Krefeld (DE)
(74) Representative: Nobbe, Matthias

(57) **Abstract**

The present invention pertains to a filler mixture of thermoconductive particles having different particle sizes, a polymer composition comprising at least one polymer and thermoconductive filler particles having different particle sizes dispersed in the polymer matrix and the use of said zinc sulfide (ZnS) particle mixture as a thermoconductive filler in polymer compositions.

## Description

The present invention refers to a filler mixture of thermoconductive filler particles having different particle sizes, a polymer composition comprising at least one thermoplastic polymer and said thermoconductive filler particles having different particle sizes dispersed in the polymer matrix, the use of said zinc sulfide (ZnS) particle mixture as a thermoconductive filler in polymer compositions and articles made from or coated with said polymer composition containing the thermoconductive filler particles.

### State of the Art

In the field of microelectronics, such as integrated circuits, light-emitting diode (LED), power electronics, displays and photovoltaics, heat dissipation has become an increasingly challenging issue. The performance of the electronic devices is directly affected by the operating temperature. Lowering the operation temperature of the devices and electronical components increases the lifetime and improves the performance of these devices. Often, conventional thermally conductive materials composed of metals are not applicable in view of the deficiencies such as low formability and productivity which limit the design of electronic components and the electro-conductivity of metals is mostly undesirable.

For electronic articles, such as LED, a lifetime of several thousand hours should be guaranteed. Such a goal can be achieved by reducing the temperature of the LED and in many cases by using an aluminum layer in the construction of the LED devices. Nowadays, most electronic devices, e.g. in automotive construction or batteries, smartphones, laptops or LED lamps, are made out of thermoconductive but simultaneously electrically insulating thermoplastics. The thermal conductivity of said thermoplastics is usually achieved by incorporating thermoconductive, electro-insulating fillers/additives into the polymers so that the plastics remain electrically insulating. Using electrically insulating thermoplastics inside the devices has the advantage of less production steps, downsizing, less weight and more efficiency in thermal conductivity of electronics and occasions where heat transfer is needed.

Commonly used fillers/additives to increase the thermal conductivity of thermoplastics are boron nitride (BN), ZnS, Al₂O₃, graphite or aluminosilicates. Boron nitride has a thermal conductivity of 100-160 W/m•k at 296 K and its hexagonal crystal structure and the platelet-like shape give an anisotropic behavior, i.e. the thermal conductivity of boron nitride is higher in one direction than in another which is disadvantageous for applications where the polymer containing BN is coated onto an article. Though ZnS has a thermal conductivity of 27 W/m•K at 296 K, it is preferred for many applications as it has an isotropic thermoconductivity and a Mohs hardness of as low as around 3, and thus, ZnS is the most soft white pigment and can be used also in glass fiber reinforced plastics. ZnS has the similar thermal conductivity as aluminum oxide (30 W/m•K), but it is not as abrasive as aluminum oxide. Aluminosilicates with a medium abrasivity and thermal conductivity of 14 W/m•K are sometimes used as thermoconductive additives as well.

In the state of art, several thermoplastic materials containing thermally conductive fillers are known.

WO2007053571A2 teaches a thermal interface material comprising a matrix material and a thermally conductively filler comprising a mixture of a first thermally conductive particulate material and a second thermally conductive particulate material. Said first and second thermally conductive particulate materials are selected from the group consisting of silver, aluminum, copper, boron nitride, aluminum nitride, silver coated copper, silver coated aluminum, copper coated aluminum, and diamond.

WO2007/149783A1 discloses a thermally conductive polymer compound. Said compound comprises a thermoplastic polymer matrix and zinc sulfide and thermal carbon black particles dispersed therein. Optionally, reinforcing filler or a second polymer or both are present. Optionally, a colorant is present to take advantage of the grayscale properties provided by the white zinc sulfide and the black thermal black particles. Said compound can be extruded or molded into a heat dissipating article.

WO2012088207A2 discloses a molded thermoplastic article comprising thermoplastic polymers and fillers, wherein one or more thermally conducive fillers are used, which are independently selected from the group consisting of calcium fluoride, magnesium oxide, magnesium carbonate, boehmite, graphite flake and carbon fiber. Preferred thermally conductive fillers are graphite flakes having a particle size of from about 5 to about 100 microns and preferably about 20 to about 80 microns in order to improve the extrusion properties of the polymer.

A different approach for influencing the thermal conductivity of a polymer is disclosed in WO2015036941A1. Said document relates to blended thermoplastic polymer compositions comprising one or more polycarbonate polymers and one or more thermally conductive fillers. In more detail, said WO discloses a blended thermoplastic polymer composition comprising (a) 20 wt.% to 80 wt.% of a first polycarbonate polymer component, (b) from 1 to 30 wt.% of a second polycarbonate polymer component, wherein the second polycarbonate polymer component is a branched chain polycarbonate polymer, (c) from 1 to 30 wt.% of at least one polycarbonate-polysiloxane copolymer component, and (d) up to about 50 wt.% of a thermally conductive filler component, wherein a molded sample of the blended thermoplastic composition has a through-plane thermal conductivity of greater than or equal to 0.4 W/m•k, and wherein a molded sample of the blended thermoplastic composition has an in-plane thermal conductivity - when determined in accordance with ASTM E1461 - of greater than or equal to about 1.0 W/m•k. The thermally conductive filler in the composition may be selected from AIN, Al₄C₃, Al₂O₃, AION, MgSiN₂, SiC, Si₃N₄, graphite, expanded graphite, graphene, carbon fiber, ZnS, CaO, MgO, ZnO, TiO₂, H₂Mg₃(SiO₃)₄, CaCO₃, Mg(OH)₂, mica, BaO, gamma-AIO(OH), alfa-AIO(OH), Al(OH)₃, BaSO₄, CaSiO₃, ZrO₂, SiO₂, a glass bead, a glass fiber, MgO•Al₂O₃, CaMg(CO₃)₂, and a clay, or a combination thereof, but there is no specific mentioning of any properties of the thermally conductive filler.

In Appl. Nanoscience 2015, 697, a ZnS/PMMA (PMMA = Poly(methyl methacrylate)) composite, wherein the ZnS filler material is a nano-sized particle, is described. Transient plane source (TPS) technique was used to determine the effective thermal conductivity of ZnS/PMMA nanocomposites over the temperature range of 30-120 °C. The results indicate that the effective thermal conductivity shows increasing behavior up to glass transition temperature, beyond which it becomes constant due to the straightening of chains and vacant site scattering of phonons, respectively.

WO2016120760A1 pertains to preparation of highly thermally conductive graphite-containing polymer compositions and use thereof, wherein a composition comprising one or more additives in addition to graphite platelets is disclosed. The at least one additive comprises at least one thermally conductive fillers having a thermal conductivity in the range of from about 10 to about 30 W/m•k in an amount of about 10 wt.% to about 60 wt.%. Said at least one additive comprises AIN, Al₄C₃, Al₂O₃, BN, AION, MgSiN₂, SiC, Si₃N₄, graphite, expanded graphite, ZnS, CaO, MgO, ZnO, TiO₂, CaCO₃, mica, BaO, BaSO₄, CaSiO₃, CaSO₄, ZrO₂, SiO₂, glass beads, MgO•xAl₂O₃, CaMg(CO₃)₂, ceramic-coated graphite, clay, talc or any combination thereof.

WO2017111945 teaches a polymer thermal interface material (PTIM) comprising sinterable thermally conductive filler particles, a dispersant, and a silicone polymer matrix, wherein the thermally conductive filler particles comprise a metal selected from the group consisting essentially of silver, gold, copper, and their mixtures, and silver coated copper, gold coated copper, silver coated aluminum, gold coated aluminum and their mixtures. It is disclosed therein that sintering the above filler increase the thermal conductivity of said polymer thermal interface materials as a result of a lower thermal resistance provided by the larger average filler particle sizes.

The overall properties of the polymers comprising thermoconductive filler particles are still unsatisfactory, and there is the need to provide polymer compositions having an improved thermoconductivity and satisfying mechanical and appearance properties. The problem is solved by the provision of the product of the present invention.

### Summary of the invention

Surprisingly, the inventors have found that the inventive thermoplastic composition containing the ZnS particles of different particle sizes in a ratio as defined in the claims of present invention shows improved thermal conductivity and mechanical properties.

In order to increase the thermal conductivity of an electrically insulating polymer for cost-effective heat management, a thermoplastic polymer composition containing zinc sulfide particles is provided according to the present invention.

In more detail, the present invention refers to a filler mixture of thermoconductive ZnS particles having different particle sizes,
wherein the filler mixture of thermoconductive ZnS particles comprises ZnS particles of at least two of three particle size ranges having a d₅₀ for coarse particles of 1.5 to 1.0 µm, preferably 1.4 to 1.2 µm, a d₅₀ for medium particles of 0.7 to 0.5 µm, preferably 0.6 to 0.5 µm , and a d₅₀ for small particles of 0.45 to 0.15, preferably 0,4 to 0,2 µm,
wherein the fraction of the particles in the largest d₅₀ range is present in the particle mixture in a percentage of 20 wt.-% to 80 wt.-%, preferably 40 wt.-% to 80 wt.-% and more preferably 50 wt-% to 80% wt.-% referred to the weight of all fractions of the particles.

In case of a ZnS particle mixture comprising ZnS particles with three different particle size ranges, the fraction of the particles in the largest d₅₀ range, is present in the particle mixture in a wt.-percentage of 20 wt.-% to 80 wt.-%, preferably 40 wt.-% to 80 wt.-% and more preferably 50 wt-% to 60% wt.-% referred to the weight of all fractions of the particles.

In case of a ZnS particle mixture comprising ZnS particles with two different particle size ranges, the fraction of the particles in the largest d₅₀ range, is present in the particle mixture in a wt.-percentage of 20 wt.-% to 80 wt.-%, preferably 50 wt.-% to 80 wt.-% and more preferably 65 wt-% to 80% wt.-% referred to the weight of all fractions of the particles.

A ZnS particle mixture comprising ZnS particles with two different ZnS particle size ranges, i.e. coarse particles and small particles, having a wt.-percentage of 20 wt.-% to 80 wt.-%, preferably 50 wt.-% to 80 wt.-% and more preferably 65 wt-% to 80% wt.-% of coarse ZnS particles and having a wt.-percentage of 80 wt.-% to 20 wt.-%, preferably 50 wt.-% to 20 wt.-% and more preferably 35 wt-% to 25% wt.-% of small particles referred to the weight of all fractions of the particles is preferred.

In the context of the present invention, the term "coarse", "medium", "small" particles should be understood to define particle sizes in the order of "coarse" particles (d₅₀ of 1.5 to 1.0 µm, preferably 1.4 to 1.2 µm) > "medium" particles d₅₀ of 0.7 to 0.5 µm, preferably 0.6 to 0.5 µm > "small" particles (d₅₀ of 0.45 to 0.15 µm, preferably 0,4 to 0,2 µm). Usually, the particle size distribution of either particle size range in the inventive ZnS particle mixture is of minor importance as long as the d₅₀ values are in the defined ranges, but it can be advantageous if the particle size ranges do not overlap or only to a small extent. This should be given for a mixture of coarse ZnS particles and small ZnS particles. For the inventive filler mixture, it might be advantageous if the particle size distribution of the ZnS particle size ranges will be less broad, i.e. the d90/10 value of the particle size which comprises 80% of the particles, should be in the range of less than the twofold of the d₅₀ value.

The value d₅₀ represents the number average value where 50% of the particles are having a larger size and 50% of the particles are having a smaller size than the d₅₀ value. The d₅₀ value is measured via a CPS Disk centrifuge Model DC 2400 after treating a 0,1g sample in 50 ml PDO/Cal. for 10 min ultrasonic/stirring.

The value (d90/10) represents the particle size distribution wherein 10 to 90 % of the particles can be found. The smaller the value d90/10 the more narrow is the particle size distribution and the less is the percentage of smallest particles or coarsest particles.

Preferably, the filler mixture of thermoconductive particles comprises coarse particles in the range of 1.0 to 1,5 µm.

In order to have a uniform material, the filler mixture of thermoconductive particles is composed of ZnS. In the prior art, small ZnS particles having a median particle size d₅₀ of 0.2 - 0.4 µm are used as thermoconductive particles.

ZnS shows excellent electrical insulation properties, a moderate thermal conductivity without any anisotropic effect compared to when boron nitride alone is used. Furthermore, ZnS is quite soft so that it can be used in different kind of polymers, even in glass fiber reinforced plastics. Among various different thermoconductive additives, ZnS is a white pigment, which brings all the benefits of color and flexibility for coloring at the end user system. Thus, the inventive ZnS particle filler mixture is particularly suitable for injection molding processes and can be added to the thermoplastic polymer in higher amounts than BN without brittling. In the present invention, the loading of the polymer with the inventive ZnS particle mixture can be higher up to 80 wt.-% of the filled polymer, depending on particle sizes and surface treatment, but at least 70 wt.-% of the filled polymer.

It should be noted here that, though BN has a good thermoconductivity, BN shows an anisotropic effect, i.e. the thermoconductivity of BN is depending on the orientation of the BN particles in the polymer. This is of particular importance in case of injection molding processes where the BN particles are orientated parallel to the extrusion direction so that the thermoconductivity perpendicular to the extrusion direction is impaired compared to the thermoconductivity in the extrusion direction. Moreover, the loading of the polymer with the BN particles is limited as the polymer becomes brittle if the polymer load exceeds 50 wt.-% of the filled polymer.

In a further embodiment, the particle mixture comprises particles of two particle size ranges of the coarse particles / medium particles / small particles which results in quite satisfying thermoconductivity values and mechanical properties.

These properties are optionally improved for a filler mixture of thermoconductive particles, wherein the particle mixture comprises particles of all three particle size ranges of the coarse particles / medium particles / small particles.

The filler mixture is particularly suitable as an additive for a thermoplastic polymer or a mixture of several thermoplastic polymers, optionally including reinforcing materials such as fibers.

Such thermally conductive polymer composition may comprise at least one thermoplastic polymer and the above filler mixture, preferably in a filling content of 50 to 80 %, more preferably of 50 to 70 % of the filler mixture, referred to the total weight of the thermally conductive polymer composition.

The thermally conductive polymer composition may comprise a polymer selected from the group consisting of polyamides, polyesters, polyacrylates, ABS, polylactide, polybenzimidazole, polycarbonate, polyether sulfone, polyoxymethylene, polyetherether ketone, polyolefine, polyvinylchloride, polyphenylene oxide, polyphenylene sulfide, polystyrene, polyester and polytetrafluoroethylene, or a mixture thereof.

The thermally conductive polymer may further comprise at least one agent, selected from surface treating agents, surface active agents, viscosity-adjusting agents, melt flow improver, impact modifying agents and other agents commonly used in the technical field of thermoconductive polymers.

The ZnS particles of the filler mixture may be organically surface-modified with further compounds. According to the invention, organically surface-modified particles optionally have one or more functional groups, for example one or more hydroxyl, amino, carboxyl, epoxy, vinyl, methacrylate and/or isocyanate groups, thiols, alkyl thiocarboxylates, di- and/or polysulfide groups. The surface modifiers can be chemically and/or physically bound to the particle surface. The chemical bond can be covalent or ionic. Dipole-dipole or van der Waals bonds are possible as physical bonds. The surface modifiers are preferably bound by means of covalent bonds or physical dipole-dipole bonds. According to the present invention, the particles may also be pretreated with a reactive silane having reactive Si-H moieties, epoxy groups or other reactive polysiloxanes having Si-OR moieties in order to additionally modify the surface of the particles and/or to increase the dispersibility of the particles in the polymer.

The present invention is also directed to a process for producing the thermally conductive thermoplastic polymer composition comprising the steps of:
providing a filler mixture of thermoconductive particles ZnS particles having different particle sizes, wherein the particle mixture comprises thermoconductive particles of at least two of three particle size ranges having a d₅₀ for coarse particles of 1.5 to 1.0 µm , preferably 1.4 to 1.2 µm, a d₅₀ for medium particles of 0.7 to 0.5 µm , preferably 0.6 to 0.5 µm and a d₅₀ for small particles of (0.45 to 0.15 µm),
wherein the coarse particles, the medium particles and the small particles are comprising ZnS
blending filler mixture of step (a) into a polymer, and optionally forming a molded body including coating an article therewith.

In the process, the polymer may be selected from polyamides, polyesters, polyacrylates, ABS, polylactide, polybenzimidazole, polycarbonate, polyether sulfone, polyoxymethylene, polyetherether ketone, polyolefine, polyvinylchloride, polyphenylene oxide, polyphenylene sulfide, polystyrene, polyester and polytetrafluoroethylene, or mixtures thereof.

The inventive thermally conductive polymer composition can advantageously be used for preparing heat-dissipating articles or for coating articles, in particular in the field of LED articles and technology.

The main advantages of using ZnS compared to using boron nitride are the following:
- Improved mechanical properties of the final thermoplastic composition;
- Isotropic thermal conductivity;
- Medium thermal conductivity, which endows the thermosetting plastic with a advantangeously longer curing time compared with boron nitride;
- High filling rates of up to 80 %, preferably up to 70% of ZnS, which is not possible for those fillers, e.g. boron nitride, due to brittleness of the thermoplastic compositions containing those fillers;
- Better color for the plastic composition due to the whiteness of ZnS;
- Cost effective since ZnS is much cheaper than other fillers, e.g. boron nitride.

The inventors have found that the thermal conductivity of a polymer composition is influenced not only by the filler composition itself, but also by the size and shape of the filler particles. Good contacts between the filler particles have to be guaranteed. Such good contacts between the particles are necessary to achieve a good thermal conductivity. The present invention is also directed to the use of the thermally conductive polymer composition for preparing heat-dissipating articles or for coating articles and the so-obtained articles.

According to the present invention, a thermoplastic polymer composition comprising thermally conductive fillers of coarse particles filled with medium and/or small sized particles, preferably coarse particles and small sized particles, is provided. The combination of coarse particles and smaller particles serves for an improved thermoconductivity compared to the one size particles alone.

As a non-limiting example, a thermoplastic composition comprising ZnS coarse particles having a median particle size of 1.2 - 1.4 µm with ZnS particles of a median particle size of 0.2 - 0.4 µm shows a better thermal conductivity than the thermoplastic polymer composition comprising coarse particles of ZnS only.

Optionally, the thermoplastic polymer composition comprises ZnS particles of coarse particles with medium and small sized ZnS particles having different median particle size d₅₀.

The present invention is further illustrated by means of the attached Figures and the subsequent Examples. The Figures show:
- Fig. 1:: Indirect thermal conductivity measurements of different polymer test specimens filled with BN, prior art comparative ZnS particles, and the inventive mixture of ZnS of different particle size distributions, respectively.
- Fig. 2:: Thermal conductivity of different polyamide test specimens compositions at 25, 50, and 75 °C

For indirect thermal conductivity measurements, the increase of the temperature of the polymer test sample over the time is measured in C°. For direct thermal conductivity measurements, the thermal conductivity is measured directly in W/mK.

According to an embodiment of the present invention, the medium ZnS particles or coarse ZnS particles can be obtained by calcining small ZnS particles having a median particle size d₅₀ in the range of 0.2-0.4 µm in a temperature range of 650°C to 750°C for a time period of up to 4 hours. By mixing the small particles and the larger particles, an inventive ZnS filler mixture with an enhanced thermal conductivity can be obtained.

Table 1 shows the Melt Volume Rate (MVR) of comparative and inventive samples of ZnS particles in PA6. The highest MVR is seen in the case of the PA6 blended with coarse particles, while the PA6 blended with the inventive mixture of ZnS particles of different sizes shows a slightly lower MVR. In sharp contrast, the PA6 sample blended with only prior art particles has a very low Melt Volume Rate. The higher MVR provides a better processability of the polymer-ZnS mixture in common industrial extrusion and injection molding processes.

**Table 1. Melt volume rate of polymer compositions having ZnS of different samples**

| PA6 Ultramid B3S polymer composition blended with ZnS | MVR (275 °C / 2.16 kg) [cm³/10 min] |
|---|---|
| ZnS particles (d₅₀ = 1.2 - 1.4 µm) filling rate 50% | 11.4 |
| inventive ZnS particles mixture filling rate 50% | 9.1 |
| prior art comparative ZnS particles sample (d₅₀ = 0.2 - 0.4 µm), filling rate 50% | 3.3 |

Table 2 shows the colorimetric properties of a polyvinyl chloride composition containing the inventive ZnS filler materials composed of a ZnS mixture of 70 % by weight of particles having a median particle size d₅₀ of 1.2 - 1.3 µm and 30 % by weight of particles having a median particle size d₅₀ of 0.2 - 0.4 µm. It can be seen that the inventive combination of coarse and small particles shows a good color performance in the application in plasticized PVC-p, this is expressed in a high brightness L* and a high relative brightening power.

**Table 2: Color values of the polyvinyl chloride (PVC-p) blended with the inventive ZnS mixture particles.**

| Color value PVC-p white blend | | | | | Color value PVC-p grey blend | | | | |
|---|---|---|---|---|---|---|---|---|---|
| Ry | L* | a* | b* | yellowness | rel. brightening power | color index | L* | a* | b* |
| 88.9 | 95.5 | -1.1 | 3.5 | 5.7 | 39.8 | 0.983 | 56.3 | 0.4 | 0.4 |

As shown in Table 3, compared to the test specimen filled with 50 wt.% of boron nitride and specimen from the unfilled PA6 Ultramid B3S Natur polymer, the specimen filled with 50 wt.% of the inventive mixture of ZnS particles of different median particle sizes (weight ratio of W_{coarse} : Wₛₘₐₗₗ = 7:3) shows a high tensile strength (75.1 MPa) and tensile stress (74.9 MPa). The tensile strength of test specimen of filled with 50% of the inventive mixture of ZnS is between those values of the unfilled PA6 Ultramid B3S Natur (87.8 MPa) and the test specimen filled 50% boron nitride. The tensile stress at break of the test specimen is apparently better than both the unfilled PA6 Ultramid B3S Natur (59.9 MPa) and the specimen filled with 50% boron nitride (56.1 MPa). With 70% filling rate of the inventive mixture of ZnS particles of different particle sizes the test specimen shows slightly better performance compared to test specimen filled with only ZnS particles.

**Table 3 Mechanical properties of different polyamide test specimens filled with boron nitride, ZnS and the inventive material (according to ISO 527)**

| polymer sample | tensile strength | standard deviation | tensile stress at break | standard deviation |
|---|---|---|---|---|
| | [MPa] | | [MPa] | |
| PA6 Ultramid B3S Natur unfilled | 87.8 | 0.2 | 59.5 | 9.0 |
| the inventive filler mixture of ZnS particles (70% filling) | 52.3 | 2.8 | 52.3 | 2.8 |
| Prior art ZnS particles d₅₀ = 0.2-0.4 µm (70% filling) | 49.4 | 2.3 | 49.4 | 2.3 |
| Prior art ZnS particles d₅₀ = 0.2-0.4 µm | 77.9 | 2.8 | 77.7 | 2.9 |
| 50% filling) | | | | |
| Boron nitride (50% filling) | 56.1 | 1.1 | 56.1 | 1.1 |
| the inventive filler mixture of ZnS particles (50% filling) | 75.1 | 0.7 | 74.9 | 0.8 |

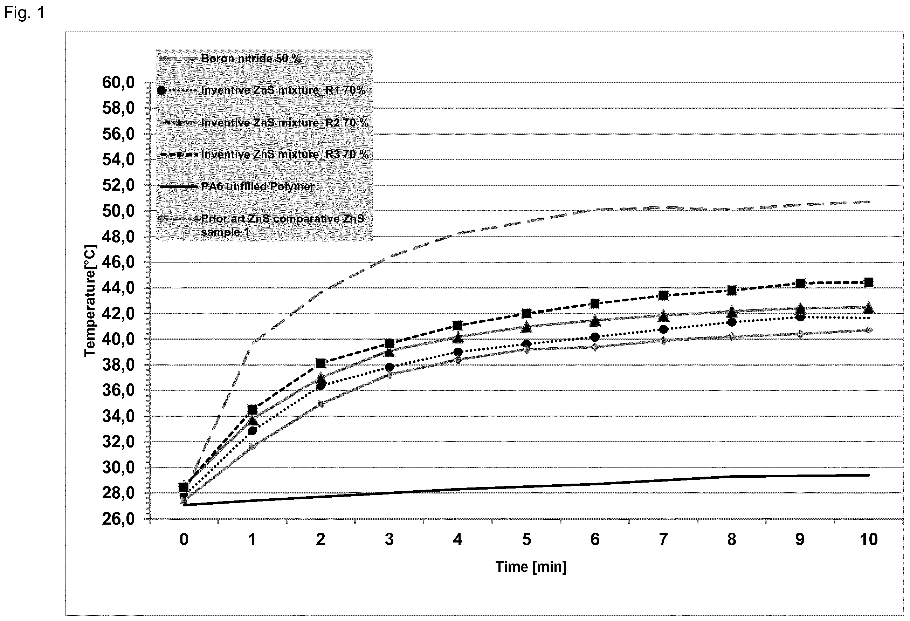

The inventive mixture of ZnS filler materials can be optimized not only by the particle size of each ZnS components, but also by the ratios therebetween. As shown in Table 4, the inventive first sample (R1, R means recipe, R1 the first recipe) represents an inventive mixture of ZnS particles composed of coarse and small ZnS particles. In the second sample (R2), the ZnS mixture is composed of coarse and medium particles. In the third sample (R3), the embodiment comprises three particle sizes. All samples have been tested for their indirect thermal conductivity with 70% filling rate (Fig. 1).
Another possibility is a mixture of ZnS particles composed of coarse and small particles in a ratio 7:3.

**Table 4: The inventive mixtures of ZnS particles having different coarse, medium, and small particle ratios**

| | Weight part of each particle fraction | | | Part Sum | Weight percentage of the coarse fraction |
|---|---|---|---|---|---|
| | 0.2 - 0.4 µm | 0.4-0.6 µm | 1.2-1.4 µm | | |
| Inventive filler mixture of ZnS particles (70% filling) - R1 | 1 | 0 | 2 | 3 | 66% |
| Inventive filler mixture of ZnS particles (70% filling) - R2 | 0 | 1 | 1 | 2 | 50% |
| Inventive filler mixture of ZnS particles (70% filling) - R3 | 1 | 1 | 2 | 4 | 50% |

As shown in Fig. 1, the test specimen filled with 70 wt.% of the inventive mixture of ZnS particles show surprisingly better thermal conductivity than the test specimen filled with 70 wt.% prior art ZnS particles. The embodiment as shown in the polyamid test specimen (R3) shows apparently the best thermal conductivity performance compared with the polyamide test specimens (R1 and R2)

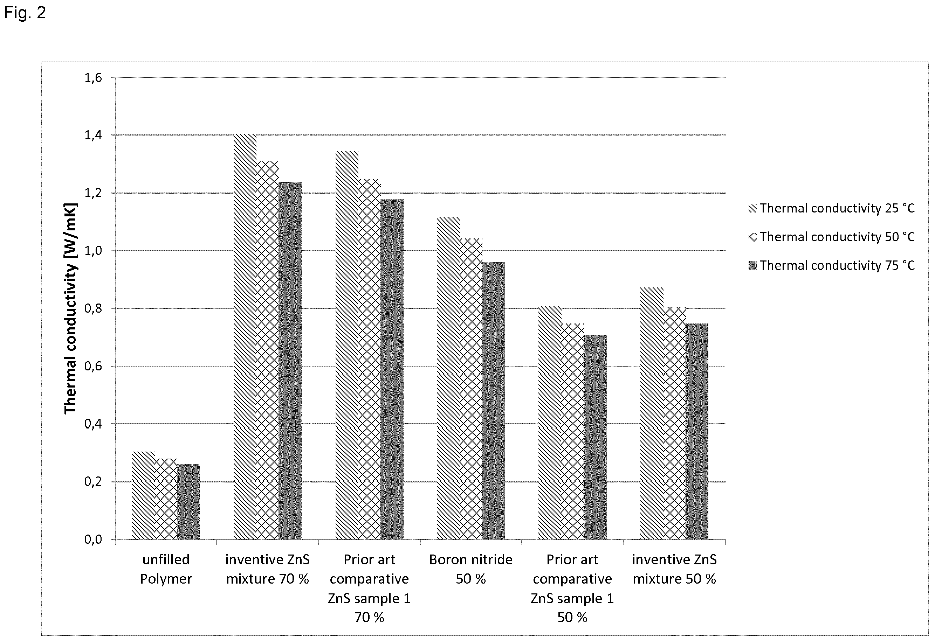

As shown in Fig. 1, the polyamide test specimen (R3 70 wt.%) shows apparently the best thermal conductivity performance compared with the polyamide test specimens (R1 70 wt.%) or (R2 70 wt.%). The results are also shown in Fig. 2.

Table 5 shows the results of the thermal conductivity measurements for various PA6 test specimens blended with different ZnS particles at 25 °C, 50 °C, and 75 °C. The thermal conductivities of test specimens without filling materials or filled with BN are listed for comparison. It can be seen that test specimens blended with the inventive mixture of ZnS particles of different particle sizes show better thermal conductivity performance than test specimens blended with particulate ZnS materials from the prior art at the same filling rate (50 wt.% and 70 wt.%, respectively).

**Table 5. Thermal conductivity measurements for various PA test specimens.**

| sample plates 12.6x12.6x3 mm³ | density at 23 °C g/cm³ composite | sample temperature [°C] | thermal conductivity [W/m•K] composite | spec. heat capacity (Cp) [J/g•K] composite | temperature conductivity [10⁻⁶ m²/s] composite |
|---|---|---|---|---|---|
| Nr. 0 unfilled polymer | | 25 | 0.304 | | 0.158 |
| | 1.1 | 50 | 0.279 | 1.750 | 0.145 |
| | | 75 | 0.259 | | 0.135 |
| | | | | | |
| Nr. 1R1 70% inventive ZnS particle mixture | | 25 | 1.405 | | 0.502 |
| | 3.2 | 50 | 1.31 | 0.875 | 0.468 |
| | | 75 | 1.237 | | 0.442 |
| | | | | | |
| Nr. 2 70% prior art ZnS particles | | 25 | 1.346 | | 0.481 |
| | 3.20 | 50 | 1.248 | 0.875 | 0.446 |
| | | 75 | 1.178 | | 0.421 |
| | | | | | |
| Nr. 3 50% boron nitride particle | 1.6 | 25 | 1.118 | | 0.430 |
| | | 50 | 1.043 | 1.625 | 0.401 |
| | | 75 | 0.959 | | 0.369 |
| | | | | | |
| Nr.4 50% prior art ZnS particle | | 25 | 0.807 | | 0.276 |
| | 2.6 | 50 | 0.748 | 1.125 | 0.256 |
| | | 75 | 0.707 | | 0.242 |

| | | | | | |
|---|---|---|---|---|---|
| Nr. 5 R1 50% inventive ZnS particle mixture | | 25 | 0.874 | | 0.299 |
| | 2.6 | 50 | 0.804 | 1.125 | 0.275 |
| | | 75 | 0.748 | | 0.256 |

Thus, using the inventive mixture of ZnS filler particles having at least two different sizes of ZnS particles, thermoplastic polymer compositions with apparently improved thermal conductivity are provided.

### Examples

The following examples serve the purpose of illustrating the present invention while not limiting the scope of the invention.

### Preparation of coarse ZnS particles having d₅₀ of 1.2 - 1.4 µm

500 g of ZnS small particles having a median particle size of d₅₀ = 0.2 - 0.4 µm is calcined at 670 °C for 2 hours or alternatively calcined at 710 °C for 1 h. After quenching in water and removing of the ZnO with diluted sulfuric acid the suspension was treated with an Ultraturrax, filtered, and dried in an oven at 120 °C for 2 hours. The ZnS particles were subjected to pin-milling to smash the oversized particles. After pin-milling the material was mixed with small ZnS particles (d₅₀ = 0.2 - 0.4 µm) in a mass ratio of 7 (coarse particles) : 3 (small particles).

The inventive mixture of ZnS filler materials having different particle sizes were prepared by mixing the ZnS coarse particles, the medium particles and the small particles in various ratios. For example, it may comprise small and coarse ZnS particles in a mass ratio of 1 : 2, R2 medium ZnS (d₅₀ = 0.4 - 0.6 µm) and coarse ZnS in a ratio of 1 : 1, R3 small, coarse zinc sulfide, and medium zinc sulfide (d₅₀ = 0.5-0.6 µm) in a ratio of 1 : 2 : 1.

### Preparation of the thermoplastic PA6 polymer compositions

The compounding of the thermoplastic polymers were accomplished using Coperion W&P ZSK25. The carrier polymer PA6 Ultramid B3S was ground beforehand on Fitsch Pulverisette and dried in vacuum drying oven at 90 °C for 4 hours. Mixtures of the above-mentioned components and PA6 powder were premixed in a pot roller for circa 30 minutes. The extrusion was carried out at a temperature of 240 - 260 °C, a rotation speed of 250 UpM, and a dosage of 5 kg/h. Where the surface-treatment additive Tego 6875 was added, it was subjected to tumbling in a roller conveyer overnight.

The unfilled PA6 powder was additionally extruded.

The manufacture of the test specimens was accomplished using Arburg Allrounder 220-90-350. After pre-drying under vacuum at 90 °C for 4 hours, the compounds were injection molded into 3 mm-plates, small- and shouldered test specimen (Schulterstäben), wherein the instrument is equipped with a needle-valve-nozzle and was operated at a temperature of 50 °C.

In case of PA6 thermoplastic compositions, circa 1.2 kg of each of the master was compounded in polymer PA6 in a 70 wt.% filling rate and extruded into 3 mm plates and small bars.

### Test of the Mechanical Properties

The test specimens were packed in PE-bags immediately after injection molded and were stored in an acryl glass chamber at room temperature until test. Thus, it can be taken that the moisture content is equally low for all test specimens. The following tests were carried out: Charpy Impact strength, 3-point bending test, tensile test, color values CIELAB, The Melt Volume Rate was tested for the dried granulate at 275 (190 in the table)°C/2.16 kg.

The test methods are carried out as follows:

### Particle Size

For determination of the particle size (d50 value), a CPS Disc Centrifuge, Model DC24000, was used. The sample (0.1 g) was added to 50 ml PDO/Cal and was treated in a ultrasonic bath under stirring for 10 minutes. The speed of the CPS is 8000 rpm.

### Charpy Impact strength test

The tests to determine the mechanical impact strength were performed according DIN EN ISO 179. Test specimen were injection molded and were measured notched (type A 0,25 mm) or unnotched respectively with a pendulum hammer device in a standardized climate (23C, 50% humidity).

### 3-point bending test

Bending tests were performed according DIN EN ISO 178 in a standardized climate (23C, 50% humidity) on a Zwick Roell tensile and bending test device.

### Tensile test

Tests to determine tensile stress and strain were preformed according DIN EN ISO 527 on a Zwick Roell tensile and bending test device an a standardized climate (23C, 25% humidity).

### Color values CIELAB

Colour was measured with a X-Rite Spectrometer CE7000 (D65 light including UV and gloss, aperture 25.4 mm) in reflectance mode, received data was calculated according DIN EN ISO 1664-4.

### Thermal conductivity Test

Measurement of the surface temperature of the 3-mm plates during heating (placing the text specimens on a heating plate heated to 80 °C, insert the measuring probe immediately and start measuring the surface temperature, record every 15 sec the measured value over a period of several minutes).

### Melt Volume rate

The melt flow rate (melt volume rate respectively) was measured according DIN EN ISO 1133 with a Göttfelt device. A small sample of about 5 g is heated above its melting point and forced to a flow through a capillary using a piston actuated by a specific weight (here 2,16 kg). The weight (or volume respectively) of melt flowing through the capillary in 10 minutes is the melt flow rate (melt volume rate respectively).

## Claims

1. A filler mixture comprising thermoconductive ZnS particles, wherein the filler mixture of thermoconductive ZnS particles comprises ZnS particles of at least two of three particle size ranges selected from coarse particles, medium particles and small particles,
wherein said particles are having a d₅₀ for coarse particles of 1.5 to 1.0 µm , preferably 1.4 to 1.2 µm , a d₅₀ for medium particles of 0.7 to 0.5 µm , preferably 0.6 to 0.5 µm , and a d₅₀ for small particles of 0.45 to 0.15, preferably 0,4 to 0,2 µm ,
wherein the fraction of the particles in the largest d₅₀ range is present in the particle mixture in a percentage of 20 wt.-% to 80 wt.-%, preferably 40 wt.-% to 80 wt.-% and more preferably 50 wt-% to 80% wt.-% referred to the weight of all fractions of the particles

2. A filler mixture of thermoconductive ZnS particles according to claim 1, comprising ZnS particles with three different particle size ranges, wherein the fraction of the particles in the largest d₅₀ range is present in the particle mixture in a wt.-percentage of 20 wt.-% to 80 wt.-%, preferably 40 wt.-% to 80 wt.-% and more preferably 50 wt-% to 60% wt.-% referred to the total weight of all fractions of the particles.

3. A filler mixture of thermoconductive ZnS particles according to claim 1 , comprising ZnS particles with two different particle size ranges, the fraction of the particles in the larger d₅₀ range, is present in the particle mixture in a wt.-percentage of 20 wt.-% to 80 wt.-%, preferably 50 wt.-% to 80 wt.-% and more preferably 65 wt-% to 80% wt.-% referred to the total weight of all fractions of the particles.

4. A filler mixture of thermoconductive particles according to claim 3, having a wt.-percentage of coarse ZnS particles of 20 wt.-% to 80 wt.-%, preferably 50 wt.-% to 80 wt.-% and more preferably 65 wt-% to 80% wt.-% and having a wt.-percentage of small particles of 80 wt.-% to 20 wt.-%, preferably 50 wt.-% to 20 wt.-% and more preferably 35 wt-% to 25% wt.-% referred to the weight of all fractions of the particles.

5. Use of the filler mixture of any of the claims 1 to 4 as an additive for a polymer or a mixture thereof.

6. A thermally conductive polymer composition, comprising at least one polymer and the filler mixture of any of claims 1 to 4, preferably in a filling rate of 50 to 80 %, more preferably of 50 to 70 % of the filler mixture, referred to the total weight of the thermally conductive polymer composition.

7. The thermally conductive polymer composition according to claim 6, wherein the polymer is a thermoplastic polymer selected from the group consisting of polyamides, polyesters, polyacrylates, ABS, polylactide, polybenzimidazole, polycarbonate, polyether sulfone, polyoxymethylene, polyetherether keton, polyolefine, polyvinylchloride, polyphenylene oxide, polyphenylene sulfide, polystyrene, and polytetrafluoroethylene, or a mixture thereof.

8. The thermally conductive polymer composition according to any one of claims 6 or 7, additionally comprising at least one agent, selected from surface treating agents, surface active agents, antifoaming agents, viscosity-adjusting agents.

9. Process for producing a thermally conductive thermoplastic polymer composition as claimed in any one of claims 6 to 8 comprising the steps of:
- providing a filler mixture of thermoconductive particles ZnS particles having different particle sizes as claimed in any of claims 1 to 4,
- blending the filler mixture of step (a) into a polymer, and optionally followed by the step of forming a molded body or of coating an article.

10. Process for the producing a thermally conductive polymer composition as claimed in claim 9, wherein the polymer is thermoplastic polymer selected from polyamides, polyesters, polyacrylates, ABS, polylactide, polybenzimidazole, polycarbonate, polyether sulfone, polyoxymethylene, polyetherether keton, polyolefine, polyvinylchloride, polyphenylene oxide, polyphenylene sulfide, polystyrene, and polytetrafluoroethylene, or a mixture thereof.

11. Use of the thermally conductive polymer composition according to any one of claims 6 to 8 or of the thermally conductive polymer composition obtainable according to the process of any of claims 9 or 10 for preparing heat-dissipating articles or for coating articles.

12. Use of the thermally conductive polymer composition according to any one of claims 6 to 8 or of the thermally conductive polymer composition obtainable according to the process of any of claims 9 or 10 in an extrusion process.

13. Article made from or being coated with the thermally conductive polymer composition according to any one of claims 5 to 8.
